# EUROPEAN PATENT APPLICATION

(11) **EP 4 800 608 A1**
(43) Date of publication of application: **02.09.2026**
(21) Application number: 23960180.0
(22) Date of filing: 30.11.2023
(51) Int. Cl.: G06N 20/00

(54) **INFORMATION COMPLEMENTING DEVICE AND INFORMATION COMPLEMENTING METHOD**

(71) Applicant: NTT, Inc., Tokyo 100-8116 (JP)
(72) Inventor: SHINOHARA, Masanori, Musashino-shi, Tokyo 180-8585 (JP); UEHARA, Takayuki, Musashino-shi, Tokyo 180-8585 (JP); NAKAJIMA, Yoshiaki, Musashino-shi, Tokyo 180-8585 (JP); SATO, Ryota, Musashino-shi, Tokyo 180-8585 (JP); WADA, Yasunori, Musashino-shi, Tokyo 180-8585 (JP); ARAKAWA, Reika, Musashino-shi, Tokyo 180-8585 (JP); KANEMOTO, Yo, Musashino-shi, Tokyo 180-8585 (JP)
(74) Representative: Hoffmann Eitle
(86) International application number: PCT/JP2023/042871
(87) International publication number: WO 2025/115162

(57) **Abstract**

A data collection unit (11) collects information related to a target object and uses the collected information as collected data (101). A data normalization unit (12) generates training data (102) by adding a type of data as an input type to the collected data (101) collected by the data collection unit (11). A training unit (13) trains a machine learning model (103), which is a large-scale language model, based on the training data (102) generated by the data normalization unit (12). By using a part of visualization data, which includes configuration information, state information, and evaluation information of a target object, and information indicating a relationship with other related objects, and the trained machine learning model (103), an inference unit (14) infers information other than the part of the visualization data. A correction unit (15) corrects the information of the visualization data inferred by the inference unit (14) based on the collected data (101).

## Description

### Technical Field

The present invention relates to an information supplementation device and an information supplementation method.

### Background Art

As security measures for a supply chain, there is a technology for performing security inspections such as a configuration inspection and a vulnerability inspection using data visualizing a configuration, a state, and an evaluation regarding a device, a system, or a service (hereinafter referred to as "visualization data"). For example, as an example of a technology for sharing configuration information, a Software Bill of Materials (SBOM) has been proposed as a data format or a process for listing and documenting components and dependency relationships of a software product.

More specifically, the SBOM is a "bill of materials" for software, and is a data format or a process for listing and documenting components and dependency relationships of a software product. The SBOM provides transparency for a software product and is used for purposes such as traceability, security, legal compliance, license management, or vulnerability management.

### Citation List

### Non Patent Literature

Non Patent Literature 1: "The Minimum Elements For a Software Bill of Materials[SBOM]", [online], July 12, 2021, The United States Department of Commerce, [Retrieved on October 24, 2023], Internet <URL: https://www.ntia.doc.gov/files/ntia/publications/sbom_minim um_elements_report.pdf>

### Summary of Invention

### Technical Problem

Here, since visualization data of a device provided by a provider to a user often contains confidential information for the provider, such as unique ideas, it is difficult for the provider to provide all the visualization data due to concerns of confidential information leakage. Furthermore, it is also conceivable that unintended errors are included in the information provided by the provider. As described above, even when the SBOM or the like is provided, there is a case where information necessary for a security inspection is insufficient or contains errors, and thus it is difficult to perform an inspection with high accuracy.

The present invention has been made in view of the above, and an object thereof is to improve the accuracy of the inspection.

### Solution to Problem

In order to solve the above-described problems and achieve the object, a data collection unit collects information related to a target object and uses the collected information as collected data. A data normalization unit generates training data by adding a type of data as an input type to the collected data collected by the data collection unit. A training unit trains a large-scale language model based on the training data generated by the data normalization unit. By using a part of visualization data, which includes configuration information, state information, and evaluation information of a target object, and information indicating a relationship with other related objects, and the trained large-scale language model, an inference unit infers information other than the part of the visualization data. A correction unit corrects the visualization data inferred by the inference unit based on the collected data.

### Advantageous Effects of Invention

According to the present invention, the accuracy of the inspection can be improved.

### Brief Description of Drawings

Fig. 1 is a block diagram illustrating an example of an information supplementation device.
Fig. 2 is a diagram illustrating an example of collected data.
Fig. 3 is a diagram illustrating an example of training data that is sentence-type data.
Fig. 4 is a diagram illustrating an example of training data that is word-sequence type data.
Fig. 5 is a diagram illustrating an example of a procedure for creating training data in a case where GPT-2 is used.
Fig. 6 is a diagram illustrating an example of correction processing.
Fig. 7 is a flowchart of supplementation processing by an information supplementation device according to a first embodiment.
Fig. 8 illustrates an evaluation procedure.
Fig. 9 is a diagram illustrating an example of an evaluation result.
Fig. 10 is a diagram illustrating an example of a computer that executes an information supplementation program.

### Description of Embodiments

Hereinafter, an embodiment of an information supplementation device and an information supplementation method disclosed in the present application will be described in detail with reference to the drawings. Note that the information supplementation device and the information supplementation method disclosed in the present application are not limited by the following embodiment.

### (First Embodiment)

### (Configuration of Information Supplementation Device)

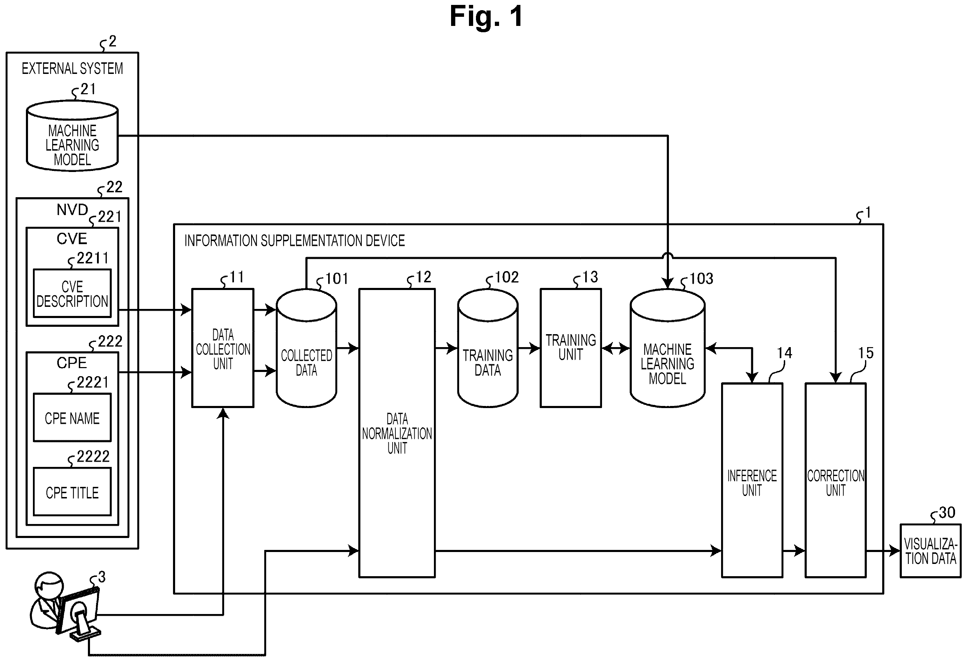

Fig. 1 is a block diagram illustrating an example of an information supplementation device. An information supplementation device 1 has two operation phases: a training phase and an inference phase.

In the training phase, the information supplementation device 1 acquires target object-related information related to each element such as a product, a system, or a service constituting a supply chain. As the target object-related information, any information can be used as long as the information is related to each element, and the target object-related information may be a part of configuration information, state information, evaluation information, and information indicating a relationship between elements, that is, a part of visualization data. The information supplementation device 1 generates a large-scale language model that infers the visualization data from the acquired target object information.

In the inference phase, the information supplementation device 1 infers missing information in visualization data of the inference target, from a part of visualization data obtained regarding various inference targets that constitute a supply chain, by using the trained large-scale language model. In particular, the information supplementation device 1 infers information necessary for a vulnerability inspection, such as common platform enumeration (CPE) and persistent uniform resource locator (PURL).

Here, the configuration information is identification information for a product, a system, a service, and the like constituting the supply chain, information describing content and specifications thereof, and the like. The product refers to various devices included in a supply chain and components for realizing those devices, and includes both hardware components and software components. Furthermore, the specification is information that defines what kind of basic function each of a product, a system, and the like, represented by the configuration information, has and provides externally. For example, the specification defines physical or electrical input/output of a target object, such as a physical action, display, or transmission and reception of data and signals.

In addition, the configuration information includes a model number and a serial number of a component as information regarding the hardware component. Furthermore, the configuration information includes a package name, a file name, and their associated attribute information as information regarding the software component. The information regarding the software component is, for example, information obtained from data of a package management system of an operating system (OS), an SBOM, or the like.

The state information is information generated as a result obtained when a product, a system, or a service constituting a supply chain is operated. For example, logs and resource usage of a product, a system, or a service correspond to the state information.

The evaluation information is information calculated based on a predetermined metric for a product, a system, or a service constituting the supply chain. For example, an inspection result for the product, the system, or the service, security risk information, and the like correspond to the evaluation information.

The information indicating a relationship between the elements is information representing a connection relationship, a topology, and a containment relationship between products, systems, or services constituting a supply chain. The information indicating a relationship between elements represents, for example, a relationship between an element "finished product" and an element "component" constituting it, a relationship between components of a specific finished product.

The visualization data is a generic term for configuration information, state information, evaluation information, and information indicating a relationship between elements, which are associated with a device, a system, or a service.

As illustrated in Fig. 1, the information supplementation device 1 is connected to an external system 2 and a user terminal 3 that hold information regarding a product, a system, or a service via a network.

The external system 2 is not limited to a single system, and is a generic term for various information sources such as the Internet and the like existing outside the information supplementation device 1. The external system 2 includes an open source intelligence (OSINT), a public site for information regarding a target object provided by a provider of the target object, and a database in which vulnerability information is collected. The OSINT refers to a process or method for collecting and analyzing publicly available information. In general, the OSINT is collected from the Internet and public information sources and utilized for various purposes such as security, business, journalism, and research.

The external system 2 includes, for example, Hugging Face, which is a platform that provides machine learning models and datasets, and includes a machine learning model 21. The machine learning model 21 is a pre-trained model of a large-scale language model, and for example, a Generative Pretrained Transformer (GPT) (registered trademark) or a Text-to-Text Transfer Transformer (T5) is used.

Furthermore, the external system 2 also includes a NATIONAL VULNERABILITY DATABASE (NVD) 22. The NVD 22 holds information regarding Common Vulnerabilities and Exposures (CVE) 221 and CPE 222. The CVE 221 includes information regarding a CVE description 2211. The CPE is a standard format for uniquely identifying information regarding a computer system and application software, and is mainly used in security vulnerability information and a vulnerability diagnosis tool. The CPE 222 includes information regarding a CPE name 2221 and a CPE title 2222. In addition, the external system 2 may have license information, vulnerability information, and information included in visualization data.

The user terminal 3 is a computer of a user who uses the information supplementation device 1. The user includes an administrator or the like of the information supplementation device 1. The user can transmit data to the information supplementation device 1 using the user terminal 3.

For example, in the training phase, the user transmits the visualization data used for machine learning to the information supplementation device 1 using the user terminal 3. In this case, the visualization data may not be complete, or may be partial. Furthermore, in the inference phase, the user transmits inference data such as a part of the visualization data to the information supplementation device 1 using the user terminal 3, and causes the information supplementation device 1 to infer the visualization data for various inference targets constituting a supply chain.

Here, in the present embodiment, a case will be described where the information supplementation device 1 performs training using data regarding a product, a system, and a service included in a supply chain, and performs inference on any of the product, the system, and the service, but the present embodiment is not limited thereto. In addition, the information supplementation device 1 may perform training and inference on a single device.

As illustrated in Fig. 1, the information supplementation device 1 includes a data collection unit 11, a data normalization unit 12, a training unit 13, an inference unit 14, and a correction unit 15. Hereinafter, a configuration of the information supplementation device 1 according to the present embodiment will be described in detail with reference to Fig. 1.

The data collection unit 11 acquires target object-related information, which is data related to various elements constituting a supply chain and is data used for pre-training and fine tuning of the large-scale language model, as collected data 101. For example, the data collection unit 11 acquires license information, vulnerability information, visualization data, and the like as the target object-related information.

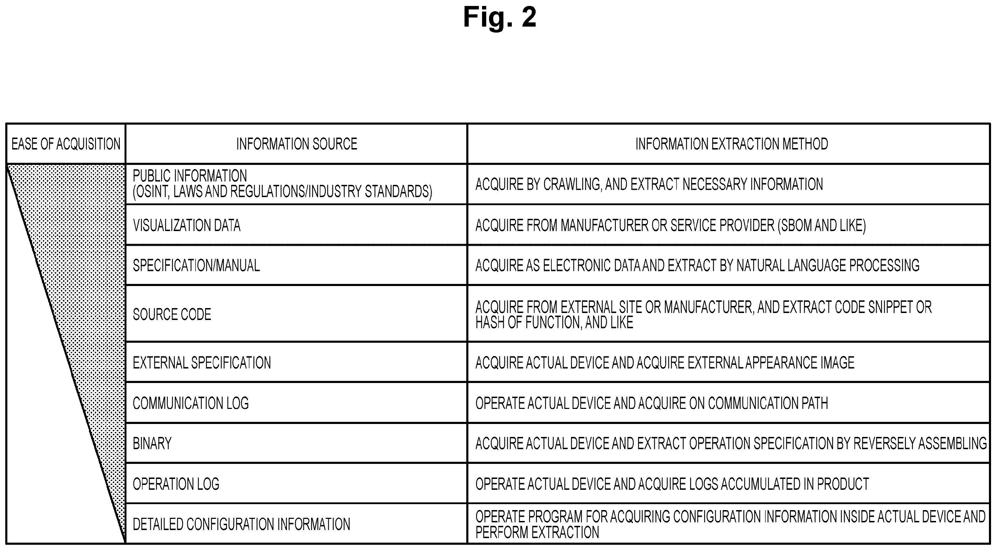

Fig. 2 is a diagram illustrating an example of the collected data. In addition, the data collection unit 11 can acquire target object-related information as illustrated in Fig. 2 and use the acquired information as the collected data 101 used for the training data 102. Each data in Fig. 2 is data that is more easily obtained as it goes upward on the paper surface.

The data collection unit 11 can crawl and acquire information held in the NVD 22 such as the CVE 221 and the CPE 222, and public information such as information regarding laws and regulations or industry standards. The data collection unit 11 extracts target object-related information related to various elements constituting a supply chain from each acquired public information and sets the extracted target object-related information as the collected data 101.

The public information collection is performed, for example, by the following method. The user of the information supplementation device 1 obtains, from a provider of each element constituting a supply chain, visualization data in which a software name or the like existing in the device is described as a part of the visualization data. The data collection unit 11 collects library names by crawling the open source such as information on the Web from the viewpoint of a dependency relationship regarding the library necessary for the software operation, based on the software names acquired by the user. Thus, the data collection unit 11 can use, as training data, a relationship between the software included in each element constituting a supply chain and the library.

In the crawling of the website and the keyword extraction, for example, when Python (registered trademark) or the like is used, the data collection unit 11 can collect the library names by extracting a website including the software name by utilizing "Requests", "Beautiful Soup", "Scrapy", or the like and automatically extracting a character string associated with a word "library" from the website. In addition, the data collection unit 11 can automatically extract a related library by utilizing a database that provides a dependency relationship between open source software (OSS) libraries, such as "Open Source Insights Project" provided by Google (registered trademark).

Furthermore, the data collection unit 11 can acquire visualization data including the configuration information such as an SBOM from a manufacturer or a service provider. The visualization data acquired from the provider may include only the configuration information such as the SBOM or may include information such as the state information and the evaluation information. The data collection unit 11 can set the acquired visualization data as the collected data 101.

Furthermore, the data collection unit 11 can acquire a specification, a manual, and the like as electronic data. The data collection unit 11 extracts target object-related information related to various elements constituting a supply chain by natural language processing from the acquired electronic data such as the specification and the manual, and sets the extracted information as the collected data 101.

Furthermore, the data collection unit 11 can acquire a source code from an external site or a manufacturer. The data collection unit 11 extracts a code snippet or a hash of a function, and the like from the acquired source code to obtain the collected data 101.

Furthermore, the data collection unit 11 can receive an input of an external specification such as an external appearance image obtained from an actual physical component, and can obtain the collected data 101. Furthermore, the data collection unit 11 can acquire communication logs obtained by operating an actual product and use the acquired communication logs as the collected data 101.

The communication log collection is performed, for example, by the following method. A user of each element constituting a supply chain operates the corresponding device or system, and the data collection unit 11 captures communication logs as operation information. Furthermore, the data collection unit 11 can also utilize operation logs in a case where the operation logs can be directly confirmed or in a case where the operation logs can be remotely confirmed by utilizing rsyslog or the like. The data collection unit 11 acquires, from the collected communication logs, a protocol number, a port number, or communication content included in, for example, an Internet Protocol (IP) header or an IP payload as features related to the state information of the visualization data. Based on the acquired protocol name and port number, the data collection unit 11 can collect the software names by crawling open sources such as information on the Web from the viewpoint of a feature of a software name that uses the acquired protocol name and port number by default and dependency relationship between elements. Thus, the data collection unit 11 can use, as training data, a relationship between applications operating in the same environment.

For example, when there are an HTTP protocol and a port number 80 as the features of the target device, the data collection unit 11 can detect that the web server application is included from the open source. Moreover, the data collection unit 11 can crawl a web server application as an input, and extract the assumed application names such as "Apache", "Nginx", or "IIS". Furthermore, in a case where an HTTP header can be confirmed, the data collection unit 11 can confirm the type and version of web server application from a server tag. For example, the data collection unit 11 can estimate the presence of a web servlet container application such as tomcat/Jetty/Jboss in the case of the 8080 port, and can estimate the presence of various applications such as RemoteSH in the case of the 514 port and ssh in the case of the 22 port.

Furthermore, the data collection unit 11 can acquire a binary from an actual product, reversely assemble the acquired binary, and extract an operation specification to obtain the collected data 101. Furthermore, the data collection unit 11 can acquire operation logs accumulated in a product when operating the product, and obtain the collected data 101. Furthermore, the data collection unit 11 can acquire detailed configuration information from a program for acquiring configuration information, which operates inside the actual physical component, to obtain the collected data 101.

The detailed configuration information collection is performed, for example, by the following method. The user of the information supplementation device 1 obtains, from a provider of each element constituting a supply chain, visualization data in which a software name or the like existing in each element is described as a part of the visualization data. The data collection unit 11 collects, from the software names acquired by the user, a dependency relationship between software and a file, which is created in advance, from a viewpoint of a dependency relationship regarding a file that is necessary for the software or is possessed by the software. Thus, the data collection unit 11 can use, as training data, a relationship between the software included in each element constituting a supply chain and the file.

As a method for creating the dependency relationship between the software and the file, which is created in advance, there is the following method. The user of the information supplementation device 1 separately prepares a device in which a well-known OS or software is introduced in advance, and acquires information regarding a group of files constituting a specific OS or software. In addition, the user of the information supplementation device 1 selects a file that does not change in any environment (an execution file or the like) and a file that changes (a setting file or a log file or the like) from the acquired group of files, for example, from a directory, a filename extension, property information, and the like, as long as the software is the same, and acquires a hash value of a file that does not change. The user of the information supplementation device 1 may separately prepare a device in which a well-known OS or software is introduced in advance, for example, in the case of Linux (registered trademark), the user may search for a dependency library by utilizing a command such as "ldd" or "readelf -d", and create a database with the OS, the software name, and the version information. In addition, the user of the information supplementation device 1 may confirm a server application or the like from a "wget -S" command, or may use various commands, for example, confirming a version of Berkeley Internet Name Domain (BIND) used for a Domain Name System (DNS) server from a "dig version bind" command.

Here, in the present embodiment, a case where the collected data 101 is mainly collected from the external system 2 will be described, but the data collection unit 11 may acquire a part of the visualization data of each element constituting a supply chain via the user terminal 3. As described above, the data collection unit 11 collects information related to a target object and uses the collected information as the collected data 101.

The data normalization unit 12 generates training data 102 by adding the type of data as an input type as preprocessing for improving inference accuracy to each collected data 101 collected by the data collection unit 11. Hereinafter, an example of the preprocessing by the data normalization unit 12 will be described.

For example, in a case where the collected data 101 is input to a machine learning model 103, there is a possibility that a response with a weak relevance is output depending on probability, and the inference accuracy may decrease. For example, the word "Java (registered trademark)" may be used as a programming language for developing an application, or may be used as a platform built around a Java virtual machine. When an inference result as an application is desired, an inference result for the platform is output, which may lead to an incorrect response. Therefore, the data normalization unit 12 sets, as the training data 102, data obtained by combining the collected data 101 and the input type of the data of the collected data 101 such that a highly relevant result can be obtained in accordance with the purpose of inference. The data normalization unit 12 may use information regarding an acquisition source of data as the input type.

For example, the data normalization unit 12 adds an input type indicating the type of data to the beginning of the training data 102 including the collected data 101, and trains the machine learning model 103 on the collected data 101 together with the input type. The input type may enumerate a plurality of types of data, and is, for example, an application description, an application sbom, an application file, or the like.

Specifically, when the collected data 101 is a file list related to an application, the data normalization unit 12 sets the input type of the collected data 101 as application files and uses this as the training data 102. In a case where the training is performed in this manner, at the time of inference, the machine learning model 103 can acquire the file list from the information regarding files by receiving the input of the inference data to which the input type is added, and further, can infer the package name, version, OS, an architecture, and the like necessary for a CPE description based on the file configuration.

Furthermore, in a case where the collected data 101 includes meaningless character strings, when the machine learning model 103 is trained using the collected data 101, the model may be degraded. More specifically, when trained on data in which a character string itself is meaningless, the machine learning model 103 cannot be correctly trained on a meaningful sentence connection, and may generate a random sequence of alphabets at the time of inference. Furthermore, in a case where an existing large language model (LLM) such as GPT is used as the machine learning model 103, since it is assumed that natural sentence is input as training data, when information that does not form the sentence described in a specified format such as vulnerability information or visualization data is input as training data, the model may be degraded. Moreover, a machine learning model 103 has a limit on a usable token size, and it may be difficult to input visualization data of several tens of megabytes as it is as training data.

The data normalization unit 12 selects portions of the collected data 101 that are useful for inference, or adds data useful for inference, and converts the collected data 101 into a format useful for inference to obtain the training data 102.

For example, the data normalization unit 12 excludes, from the training target, items among the collected data 101 in which alphabetic sequences are described and uses the remaining items as the training data 102. Specifically, in a case where the collected data 101 is visualization data, the data normalization unit 12 excludes an identifier (ID) number, a software hash value, a certificate signature, and the like, and uses the remaining data as the training data 102.

In addition, the data normalization unit 12 associates the related sentences and the like based on the collected data 101 and uses the associated sentences as the sentence-type training data 102. Specifically, in a case where a CPE name 201 is inferred and the CVE 221 points out the vulnerability existing in the CPE 222 including the CPE name 201, the data normalization unit 12 associates the correct CPE name 201, the input type, and the CVE description 2211 included in the CVE 221 with each other, and uses the associated data as the training data 102.

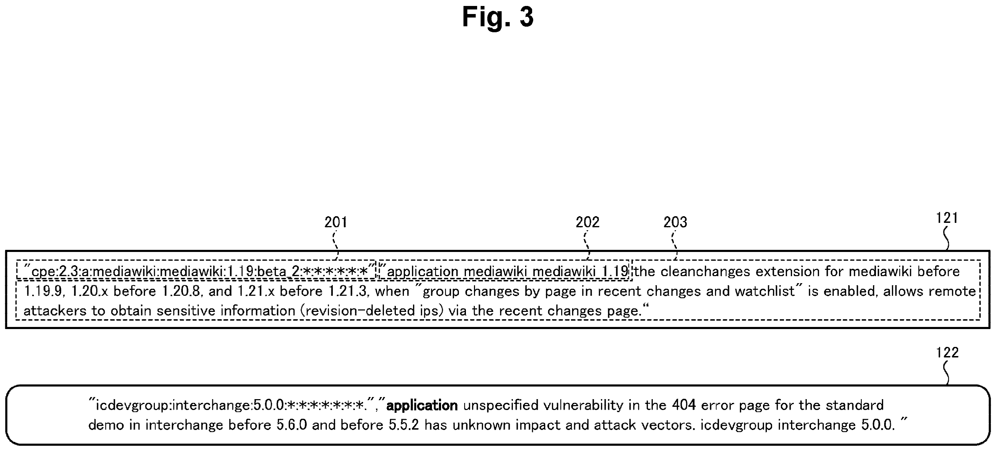

Fig. 3 is a diagram illustrating an example of the training data that is sentence-type data. For example, training data 121 for inferring the CPE name 201 in a case where T5 used as the pre-trained model is used will be described. The CVE description 2211 is used as the sentence-type data. Furthermore, the data normalization unit 12 performs normalization in accordance with T5.

The data normalization unit 12 acquires the CVE description 2211 of the CVE 221 pointing out the vulnerability of the CPE 222 including the CPE name 201. Since the CVE description 2211 is long, the data normalization unit 12 generates CVE information 203 by limiting to 1000 characters. The data normalization unit 12 adds the input type (Type) as the data type of the CVE information 203 to the beginning of the CVE information 203. Moreover, the data normalization unit 12 adds manufacturer (Vendor), product information (Product), and version (Version) to the beginning of the CVE information 203. That is, the data normalization unit 12 adds attribute information 202 including an input type to the CVE information 203. The data normalization unit 12 generates the training data 121 illustrated in Fig. 3 by associating the CVE information 203 to which the attribute information 202 is added with the CPE name 201 which is the correct answer of the inference for the CVE information. Furthermore, the data normalization unit 12 can generate training data 122 by adding the type of data to the CVE description 2211 and deleting predetermined information (cpe: 2.3:) from the CPE name 201 as the correct answer of the inference. In this manner, by removing the same character string included in most of the correct answers as the predetermined information, it is possible to prevent training on meaningless relationships and to improve training accuracy.

Since one vulnerability may be included in a plurality of pieces of software, and one piece of software may have a plurality of vulnerabilities, a plurality of CPEs 222 may correspond to one CVE 221, and a plurality of CVEs 221 may correspond to one CPE 222. Therefore, the data normalization unit 12 generates the training data 102 having the CVE description 2211 for each combination of the CPE 222 and the corresponding CVE 221.

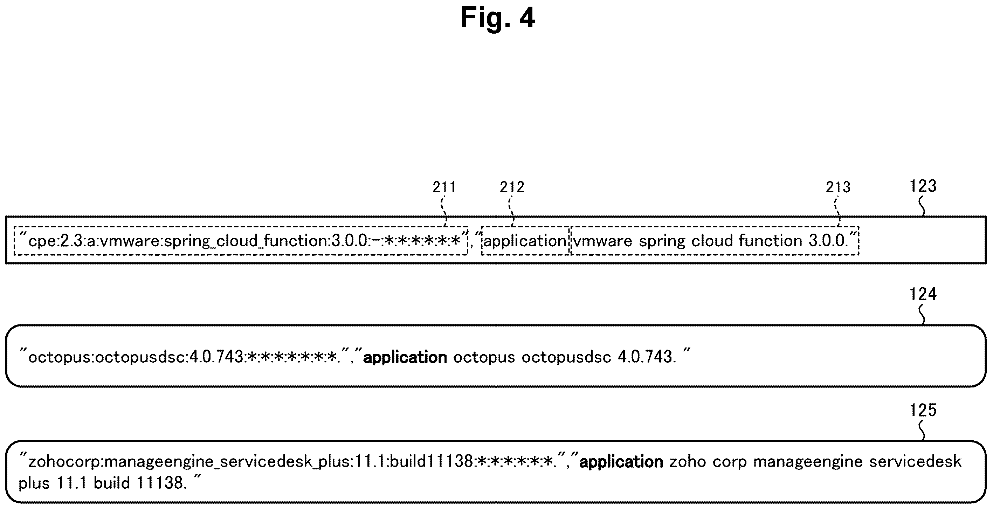

Fig. 4 is a diagram illustrating an example of the training data that is word-sequence type data. As another example, a case where the data normalization unit 12 generates training data for inferring the CPE name 211 using the word-sequence type data will be described. The data normalization unit 12 performs normalization in accordance with T5. The data normalization unit 12 treats data obtained by extracting and arranging words from the CPE title 2222 corresponding to the CPE name 211 as the word-sequence type data.

The data normalization unit 12 acquires the CPE title 2222 of the CPE 222 having the CPE name 211. Then, the data normalization unit 12 adds attribute information 212 indicating an input type (Type) to the beginning of the CPE title 2222 as the type of data of the CPE title 2222. The data normalization unit 12 generates training data 123 illustrated in Fig. 4 by associating the CPE title 2222 to which the attribute information 212 is added with the CPE name 211 which is the correct answer of the inference for the CPE title 2222. Furthermore, the data normalization unit 12 can also generate training data 124 and training data 125 by adding the attribute information 212 to the CPE title 2222 and deleting predetermined information (cpe: 2.3:) from the CPE name 211 as the correct answer of inference, similarly to the sentence-type data.

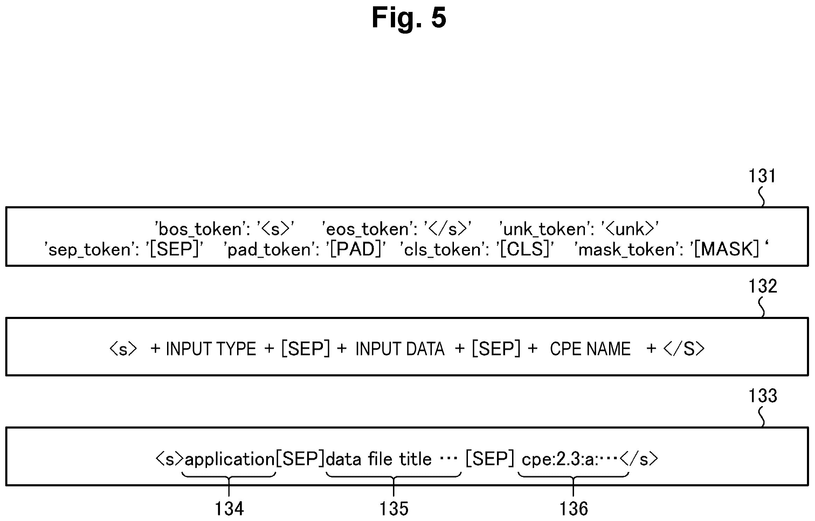

Furthermore, GPT-2 may be used as the pre-trained model. Fig. 5 is a diagram illustrating an example of a procedure for creating training data in a case where GPT-2 is used. For example, as a special token that a tokenizer generates to be used by GPT-2 for recognizing a context, there is a special token that is indicated by a sentence 131. Each special token in the sentence 131 is indicated here by a code described after a colon. For example, "bos_token" is represented as <s>.

For example, the data normalization unit 12 can use a format 132 as the training data 102 in a case where GPT-2 is used. The data normalization unit 12 generates training data 133 in accordance with the format 132 using the CPE name 2221 and the attribute information. Data 135 is data obtained from the collected data 101 and is the CVE description 2211 or the like. Data 134 is an input type of the data 135, and is application or the like. Data 136 is the CPE name 2221 which is the correct answer of inference for the data 135.

In a case where the training data 102 is generated using input data including a plurality of words, training is performed by strongly reacting to the order of appearance of words. Therefore, the data normalization unit 12 can also generate a plurality of pieces of training data 102 by shuffling the order of words in the input data.

As described above, the data normalization unit 12 generates training data by processing data such that training can be effectively performed by adding a data type as an input type to the collected data 101 collected by the data collection unit 11.

Moreover, in the present embodiment, the data normalization unit 12 may perform the following preprocessing in data normalization. For one thing, inconsistent descriptions adversely affect word similarity. The data normalization unit 12 converts all descriptions to lower case.

Furthermore, when characters not related to a sentence are included, the grasping of relationships as a sentence is adversely affected. Therefore, the data normalization unit 12 removes escape characters such as a "¥" symbol, and the like.

In addition, the data normalization unit 12 adds a termination symbol, such as a period ".", at the end of both the correct answer data and the data body in order to eliminate ambiguity in sentence structure and explicitly indicates the end of the sentence. The data normalization unit 12 generates the training data 102 by performing each preprocessing described above.

Furthermore, the pre-trained model is not limited to T5 and GPT-2, and the pre-trained model such as GPT-4, Pathways Language Model 2 (PaLM 2), or Large Language Model Meta AI 2 (Llama 2) may be used. The data normalization unit 12 normalizes data in a format suitable for performing fine tuning by using the pre-trained model actually used, and generates the training data 102.

Furthermore, the data normalization unit 12 receives an input of inference data in the inference phase. The inference data is visualization data in which some information is missing. In the present embodiment, the data normalization unit 12 acquires, from the user terminal 3, visualization data in which some information to be inferred is missing. Then, the data normalization unit 12 adds an input type to the inference data in accordance with the format of the training data 102 at the time of training. The data normalization unit 12 outputs the inference data to which the input type is added to the inference unit 14. In this manner, the data normalization unit 12 generates the input data obtained by adding the input type to the inference data based on the format of the training data 102 used for training the machine learning model 103.

Referring back to Fig. 1, the description will be continued. The training unit 13 acquires the machine learning model 21 that is a pre-trained model of a large-scale language model. The training unit 13 executes fine tuning, which is supervised learning, on the machine learning model 21 using the training data 102 to generate the machine learning model 103. The training unit 13 can easily generate the machine learning model 103 while suppressing the cost by using the pre-trained model acquired from the external system 2.

In this manner, the training unit 13 trains the large-scale language model based on the training data 102 generated by the data normalization unit 12, and generates the machine learning model 103 that is a large-scale language model (LLM). In the machine learning model 103, for example, the training unit 13 trains the large-scale language model on the relevance between the words in the data included in the collected data 101, the relevance between the words in the data and the input type, and the relevance between the correct answer data, the words in the data included in the collected data 101, and the input type.

At the time of inference, the inference unit 14 receives, from the data normalization unit 12, an input of inference data to which attribute information is added. Next, the inference unit 14 inputs the inference data to the trained machine learning model 103. The inference unit 14 acquires an inference result output from the machine learning model 103. For example, when the training data of Fig. 3 is described as an example, the inference unit 14 determines the relevance between the sentence of the input inference data and the CVE information 203 to which the attribute information 202 is added in the training data by AI, and outputs the CPE name 2221 corresponding to the CVE information 203 to which the related attribute information 202 is added. The inference unit 14 can also perform inference a plurality of times using different inference data and improve accuracy by combining results.

For example, a case where the inference unit 14 performs a single inference using configuration information of elements to be inferred is considered. In this case, a list of files related to elements to be inferred can be further acquired from a relationship with other elements.

The inference unit 14 uses the acquired input type and data of the file list as inference data, and acquires OS and architecture information related to elements to be inferred. Thus, for example, even in a case where the CPE name 2221 that can specify the CVE 221 cannot be output as an inference result through one inference, the inference unit 14 can narrow down the CPE name 2221 to be output by collating with the OS and architecture inferred from the list of files. Therefore, the inference unit 14 can improve the accuracy of inference by performing inference regarding elements to be inferred a plurality of times while changing the inference data.

The inference unit 14 performs the inference on the items of the visualization data other than the CPE name using the machine learning model 103, and acquires the visualization data related to the items to be inferred. Thereafter, the inference unit 14 outputs the acquired visualization data to the correction unit 15.

As described above, by using a part of visualization data, which includes configuration information, state information, and evaluation information of a target object, and information indicating a relationship with other related objects, and the machine learning model 103 which is the trained large-scale language model, the inference unit 14 infers information other than the part of the visualization data. Furthermore, the inference unit 14 inputs the input data for inference generated by the data normalization unit 12 to the trained machine learning model 103 to obtain an inference result.

The correction unit 15 receives an input of visualization data which is the inference output by the inference unit 14. Next, the correction unit 15 collates the acquired inference output with the collected data 101. In a case where similar data exists, the correction unit 15 corrects the visualization data of the inference output using the similar data included in the collected data 101. As described above, the correction unit 15 corrects the visualization data inferred by the inference unit 14 using the collected data 101. Thereafter, the correction unit 15 outputs visualization data 30 subjected to the correction as an inference result. Thus, the correction unit 15 can correct typos and omissions in the visualization data inferred by the inference unit 14 to output the correct answer, and can perform an accurate inspection.

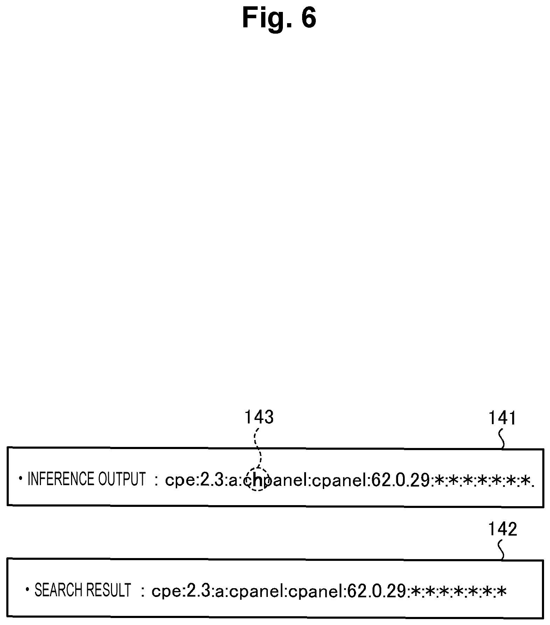

Fig. 6 is a diagram illustrating an example of correction processing. For example, the correction unit 15 acquires the CPE name 141 included in the visualization data that is the inference output. Next, the correction unit 15 collates the CPE name 141 with each of the CPE names 2221 included in the collected data 101. For example, the correction unit 15 specifies one mismatched element between each CPE name 2221 and the inferred CPE name, and collates whether elements other than the mismatched element match between each CPE name and the inferred CPE name through a partial match search. In a case where only the one mismatched element exists in the search result indicating the mismatching, the correction unit 15 determines that there is similar data and corrects the CPE name, which is the inference result, so as to match the CPE name 2221 included in the collected data 101. For example, a CPE name 142 is different from the CPE name 141 in a character 143. Since the CPE name 141 and the CPE name 142 are different in one element including the character 143, the correction unit 15 corrects the character 143 of the CPE name 141 in accordance with the CPE name 142.

Furthermore, when the training data 122 in Fig. 3, and the training data 124 and the training data 125 in Fig. 4 are created, information deleted from the CPE name, which is the correct answer (cpe: 2.3:), in order to improve the accuracy of inference is also corrected by collating with the collected data 101 in the correction processing, and the visualization data to be finally output is output in a state where the deleted information is added.

### (Supplementation Processing)

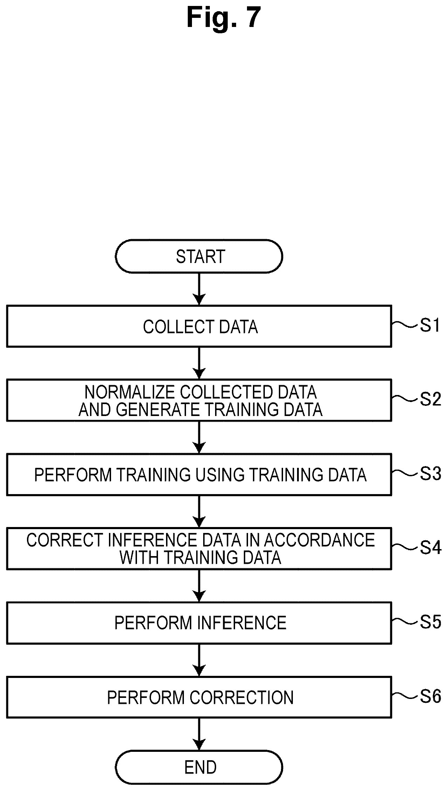

Fig. 7 is a flowchart of supplementation processing by the information supplementation device according to the first embodiment. The supplementation processing includes training processing and inference processing. Next, a flow of the supplementation processing by the information supplementation device 1 according to the present embodiment will be described with reference to Fig. 7.

The data collection unit 11 collects the target object-related information including the CVE description 2211, the CPE name 2221, and the CPE title 2222 from the NVD 22 and the like of the external system 2, and generates the collected data 101 (step S1).

Next, the data normalization unit 12 performs preprocessing such as addition of an input type, selection of a use portion, or association of related information on the collected data 101, and normalizes the collected data 101 to generate the training data 102 (step S2).

Next, the training unit 13 acquires the machine learning model 21 as a pre-trained model. The training unit 13 trains the machine learning model 21 using the training data 102 to generate the machine learning model 103 (step S3). This completes the training phase.

Next, the processing proceeds to the inference phase. The data normalization unit 12 acquires inference data input by the user from the user terminal 3. The data normalization unit 12 makes a correction of adding an input type to the inference data in accordance with the format of the training data 102 (step S4).

Next, the inference unit 14 acquires the inference data to which the input type is added from the data normalization unit 12, inputs the inference data to the trained machine learning model 103, and acquires the visualization data output from the machine learning model 103 to perform inference (step S5).

Next, the correction unit 15 collates the visualization data, which is the inference output from the inference unit 14, with the collected data 101, and then in a case where there is similar data, corrects the visualization data of the inference output using the similar data (step S6). Thereafter, the correction unit 15 outputs the corrected visualization data 30 as an inference result.

### (Effects of Information Processing Device and Configuration Information Generation Processing)

As described above, the information supplementation device 1 according to the present embodiment collects the target object-related information for each element such as a product, a system, or a service in the training phase. Next, the information supplementation device 1 trains the pre-trained model using the training data 102 obtained by performing preprocessing for improving inference accuracy on the collected data 101 to generate the machine learning model 103. In the inference phase, the information supplementation device 1 corrects the acquired inference data in accordance with the format of the training data 102, performs inference using the trained machine learning model 103, and corrects the inference output based on the collected data 101 to obtain an inference result.

Thus, even when the information is incomplete visualization data, it is possible to improve the comprehensiveness of information in the visualization data by performing inference to supplement the information. Therefore, even in a case where the collectable information is incomplete, the license inspection, the vulnerability inspection, and the like can be appropriately performed, and the accuracy of the inspection can be improved.

Furthermore, even when the visualization data that can be acquired is visualization data with incorrectly output information, the accuracy of the visualization data can be confirmed by comparison with the visualization data output through separate inference, and the visualization data can be replaced with more accurate information. Therefore, more appropriate visualization data can be obtained. Therefore, the accuracy of the license inspection, the vulnerability inspection, and the like can be further improved, and the accuracy of the inspection can be improved.

Hereinafter, evaluation of the visualization data supplemented by the information supplementation device 1 according to the present embodiment will be described. A case where the CPE is generated in the visualization data as the data to be supplemented will be described. In an evaluation method, it has been confirmed that the items in the range necessary for the vulnerability inspection are correctly output to the CPE generated by the information supplementation device 1.

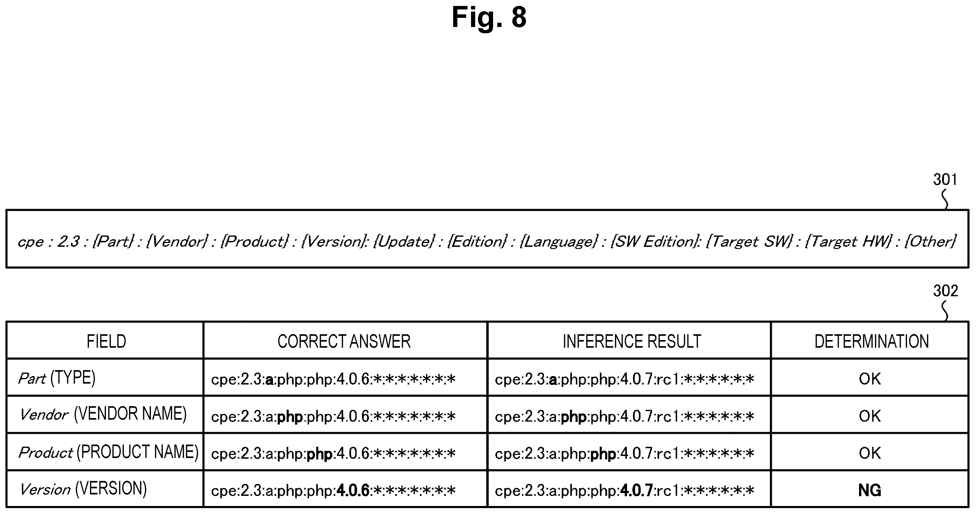

Fig. 8 illustrates an evaluation procedure. The CPE includes, for example, the information shown in a format 301 illustrated in Fig. 8. In the case of sentence output using a general large-scale language model (LLM), even when worded expressions are different, the meanings may be determined to be the same in many cases. On the other hand, in the information supplementation device 1 according to the present embodiment, it is difficult to determine the vulnerability unless the four items: type, vendor name, product name, and version are correctly output. In other words, even in a case where the same information is output, when the order is different, it can be said to be an incorrect answer. In a case where all four items: type, vendor name, product name, and version are correct, it is defined that the generated CPE is the correct answer. For example, as shown in Table 302, in a case where a certain CPE is generated, when type, vendor name, and product name are correct, but version is incorrect, it can be said to be an incorrect answer.

Here, fine tuning is performed on a pre-trained model of T5 and a pre-trained model of GPT-2, which are acquired from Hugging Face with the number of epochs set to three. For the fine tuning, 1.5 million pieces of the training data 102 which is the sentence-type data as illustrated in Fig. 3 are used, and 1.11 million pieces of the word-sequence type training data 102 as illustrated in Fig. 4 are used.

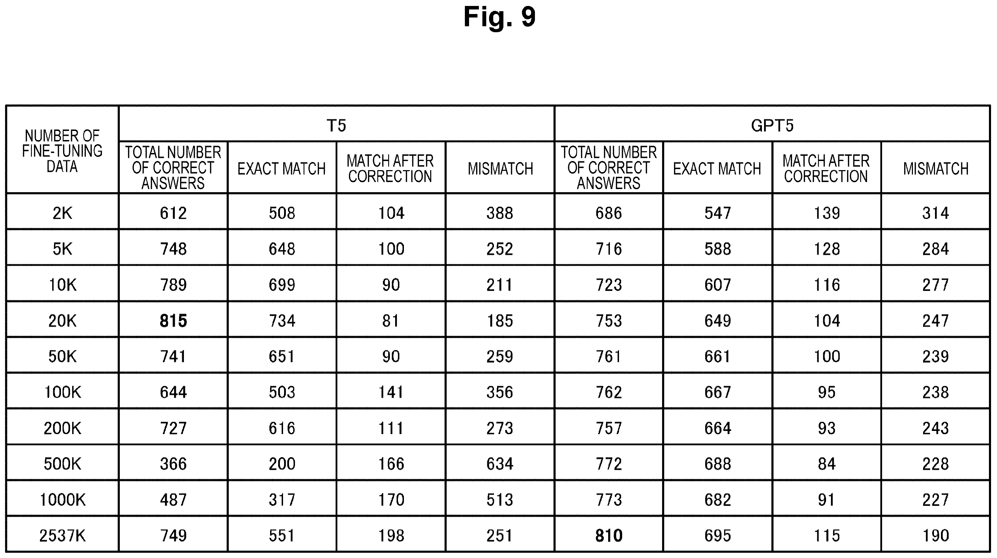

The inference is performed using 1000 pieces of data. The 1000 pieces of data used for inference are data not used for training, and the same data is used for T5 and GPT-2. Fig. 9 is a diagram illustrating an example of an evaluation result. In Fig. 9, an exact match indicates a case where the inference output by the inference unit 14 is determined to be the correct answer, and a match after correction indicates a case where the correction by the correction unit 15 is determined to be the correct answer.

As illustrated in Fig. 9, in the case of using GPT-2, the number of correct answers in inference is increased as the number of pieces of data used for fine tuning increases for both the exact match and the total number of correct answers. Furthermore, in the case of using T5, both the exact match and the total number of correct answers indicate peaks when the number of pieces of data to be used for fine tuning is around 20000, and then the indication of accuracy improvement is observed when the number of pieces of data reaches 500000 or more. The maximum correct answer rate exceeds 80% in the case of using either model.

As described above, the visualization data supplemented by the information supplementation device 1 has sufficient accuracy, and the accuracy of the license inspection and the vulnerability inspection can be improved by using these pieces of the visualization data.

### (Second Embodiment)

Next, a second embodiment will be described. The information supplementation device 1 according to the present embodiment is also represented by the block diagram of Fig. 1. The information supplementation device 1 according to the present embodiment is different from that of the first embodiment in creating a pre-trained model by using the training data 102. Hereinafter, details of the information supplementation device 1 according to the present embodiment will be described. In the following description, description of operation of each unit similar to that of the first embodiment will be omitted.

In the creation of the pre-trained model, the information supplementation device 1 according to the present embodiment is not trained on the correct answer data as in fine tuning, but is trained on language structures or patterns. Therefore, the data normalization unit 12 selects data having a high possibility of being used for inference, and further normalizes the data into a format that is easily recognized as text data.

Specifically, the data normalization unit 12 removes a non-main part of each piece of data from the collected data 101 collected by the data collection unit 11 to use it as the training data. For example, the data normalization unit 12 removes an extension area and the like in the SBOM. More specifically, the data normalization unit 12 removes an ExternalRef portion of software package data exchange (SPDX) and a properties portion of CycloneDX.

Furthermore, the data normalization unit 12 removes an item in which alphabetic sequences are described and uses the remaining items as the training data. Specifically, the data normalization unit 12 removes an ID number, a software hash value, a certificate signature, and the like.

Furthermore, the data normalization unit 12 removes delimiter symbols, such as {, }, ", and the like and escape symbols, such as ¥, and the like.

The data normalization unit 12 connects the character strings of the main portion of each piece of data by ".". The data normalization unit 12 generates the training data 102 normalized for pre-training by performing each preprocessing described above.

The training unit 13 has a sufficient amount of the training data 102 for generating the pre-trained model, and can use machine resources for generating the pre-trained model.

The training unit 13 performs pre-training, which is unsupervised learning, by using the training data 102 normalized for pre-training, and generates the pre-trained model. The training unit 13 performs fine tuning on the generated pre-trained model by using the training data 102 normalized for fine tuning, and generates the machine learning model 103.

In this manner, the training unit 13 generates the pre-trained model by performing unsupervised learning based on the training data 102 normalized for pre-training or acquires the pre-trained model from the outside. The training unit 13 generates the machine learning model 103 by performing supervised learning on the pre-trained model based on the training data 102 normalized for fine tuning.

As described above, the information supplementation device 1 according to the present embodiment creates the pre-trained model by using the training data 102 and generates the machine learning model 103 by using the pre-trained model. Thus, the information supplementation device 1 can use the pre-trained model customized exclusively for analysis of target data, and can more appropriately generate the machine learning model 103 for inferring the visualization data.

As described above, in a case where a sufficient amount of training data 102 can be collected and machine resources for generating the pre-trained model can be prepared, the information supplementation device 1 can use the pre-trained model customized exclusively for analysis of target data by performing the pre-training. On the other hand, in a case where it is difficult to prepare the sufficient amount of training data 102 or the machine resources for generating the pre-trained model, it is preferable to acquire the pre-trained model from the outside such as the external system 2.

### (System Configuration and the like)

Furthermore, each component of each device illustrated in the drawings is functionally conceptual, and is not necessarily physically configured as illustrated in the drawings. That is, a specific form of distribution and integration of each device is not limited to the illustrated form, and all or some thereof can be functionally or physically distributed or integrated in any unit in accordance with various loads, usage conditions, and the like. Moreover, all or some of processing functions performed in the respective devices may be implemented by a central processing unit (CPU) and a program analyzed and executed by the CPU, or may be implemented as hardware by wired logic.

Furthermore, in each processing described in the present embodiment, all or some of the processing described as being automatically performed can be manually performed, or all or some of the processing described as being manually performed can be automatically performed by a known method. In addition, the processing procedures, the control procedures, the specific names, and the information including various kinds of data and parameters that are illustrated in the above-described literatures and drawings can be changed as appropriate, unless otherwise specified.

### (Program)

As an embodiment, the information supplementation device 1 can be implemented by installing, on a desired computer, an information processing program for executing the information processing as package software or online software. For example, by causing an information processing device to execute the above-described information processing program, it is possible to cause the information supplementation device 1 to function. The information supplementation device 1 mentioned here includes a desktop or laptop personal computer. Furthermore, examples of the information supplementation device 1 include a mobile communication terminal such as a smartphone, a mobile phone, and a personal handy-phone system (PHS) and a slate terminal such as a personal digital assistant (PDA).

Furthermore, the information supplementation device 1 can also be implemented as a server device that uses a terminal device used by a user as a client and provides the client with a service related to the information processing. For example, the information supplementation device 1 is implemented as a server device that receives information obtained from the outside such as the external system 2 as an input and provides a service that supplements a component. In this case, the server device may be implemented as a web server or may be implemented as a cloud that provides a service related to the information processing by outsourcing.

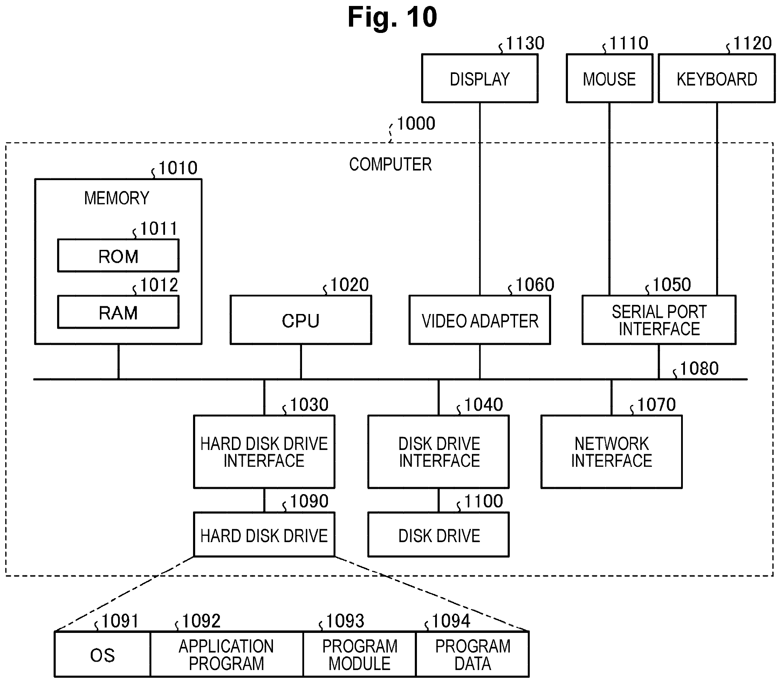

Fig. 10 is a diagram illustrating an example of a computer that executes an information supplementation program. A computer 1000 includes, for example, a memory 1010 and a CPU 1020. Furthermore, the computer 1000 also includes a hard disk drive interface 1030, a disk drive interface 1040, a serial port interface 1050, a video adapter 1060, and a network interface 1070. These units are connected to each other via a bus 1080.

The memory 1010 includes a read only memory (ROM) 1011 and a random access memory (RAM) 1012. For example, the ROM 1011 stores a boot program such as a basic input output system (BIOS). The hard disk drive interface 1030 is connected to a hard disk drive 1090. The disk drive interface 1040 is connected to a disk drive 1100. For example, a detachable storage medium such as a magnetic disk or an optical disk is inserted into the disk drive 1100. The serial port interface 1050 is connected to, for example, a mouse 1110 and a keyboard 1120. The video adapter 1060 is connected to, for example, a display 1130.

The hard disk drive 1090 stores, for example, an OS 1091, an application program 1092, a program module 1093, and program data 1094. That is, the information processing program that defines each piece of processing by the information supplementation device 1 having a function equivalent to that of the information supplementation device 1 is implemented as the program module 1093 in which a code performable by the computer is described. The program module 1093 is stored in, for example, the hard disk drive 1090. For example, the program module 1093 for executing processing similar to the functional configuration in the information supplementation device 1 is stored in the hard disk drive 1090. Note that the hard disk drive 1090 may be replaced with a solid state drive (SSD) .

Furthermore, the setting data used in the processing of the above-described embodiment is stored in, for example, the memory 1010 or the hard disk drive 1090 as the program data 1094. The CPU 1020 loads the program module 1093 and the program data 1094 stored in the memory 1010 or the hard disk drive 1090 into the RAM 1012 as necessary and executes the processing of the above-described embodiment.

Note that the program module 1093 and the program data 1094 are not limited to being stored in the hard disk drive 1090, and may be stored in, for example, a detachable storage medium and read by the CPU 1020 via the disk drive 1100 or the like. Alternatively, the program module 1093 and the program data 1094 may be stored in another computer connected via a network (local area network (LAN), wide area network (WAN), or the like). The program module 1093 and the program data 1094 may be read by the CPU 1020 from another computer via the network interface 1070.

### Reference Signs List

- 1: Information supplementation device
- 2: External system
- 3: User terminal
- 11: Data collection unit
- 12: Data normalization unit
- 13: Training unit
- 14: Inference unit
- 15: Correction unit
- 21: Machine learning model
- 22: NVD
- 30: Visualization data
- 101: Collected data
- 102: Training data
- 103: Machine learning model
- 221: CVE
- 222: CPE
- 2211: CVE description
- 2221: CPE name
- 2222: CPE title

## Claims

1. An information supplementation device comprising:
a data collection unit configured to collect information related to a target object and use the collected information as collected data;
a data normalization unit configured to generate training data by adding a type of data as an input type to the collected data collected by the data collection unit;
a training unit configured to train a large-scale language model based on the training data generated by the data normalization unit;
an inference unit configured to, by using a part of visualization data, which includes configuration information, state information, and evaluation information of a target object, and information indicating a relationship with other related objects, and the trained large-scale language model, infer information other than the part of the visualization data; and
a correction unit configured to correct the information of the visualization data inferred by the inference unit based on the collected data.

2. The information supplementation device according to claim 1,
wherein the training unit is further configured to
generate a pre-trained model that is the large-scale language model by performing unsupervised learning based on the training data, or acquire the pre-trained model from outside, and
generate the large-scale language model trained by performing supervised learning on the pre-trained model using the training data.

3. The information supplementation device according to claim 1,
wherein the data normalization unit is further configured to generate input data obtained by adding the input type to the part of the visualization data based on a format of the training data used for training the large-scale language model, and
the inference unit is further configured to input the input data generated by the data normalization unit to the trained large-scale language model to obtain an inference result.

4. An information supplementation method that causes a computer to execute:
a data collection step of collecting information related to a target object and using the collected information as collected data;
a data normalization step of generating training data by adding a type of data as an input type to the collected data collected in the data collection step;
a training step of training a large-scale language model based on the training data generated in the data normalization step;
an inference step of, by using a part of visualization data, which includes configuration information, state information, and evaluation information of a target object, and information indicating a relationship with other related objects, and the trained large-scale language model, inferring information other than the part of the visualization data; and
a correction step of correcting the information of the visualization data inferred in the inference step based on the collected data.
